# FASCICULE DE BREVET EUROPEEN

(11) **EP 2 254 207 B1**
(45) Date de publication et mention de la délivrance du brevet: **17.07.2013**
(21) Numéro de dépôt: 10354017.5
(22) Date de dépôt: 29.03.2010
(51) Int. Cl.: H02B 1/056

(54) **Ensemble de connexion multiple de dispositifs de coupure débrochables et dispositif de coupure destiné à être connecté audit ensemble**
Mehrfachanschlusseinheit für trennbare Unterbrechungsvorrichtungen, und Unterbrechungsvorrichtung zum Anschluss an dieser Einheit
Unit for multiple connection of detachable switching devices and switching device connectable to said unit

(30) Priorité: 19.05.2009 FR 0902449
(43) Date de publication de la demande: 24.11.2010
(73) Titulaire: Crouzet Automatismes, 26000 Valence (FR)
(72) Inventeur: Meux, Dominique, 38050 Grenoble Cedex 09 (FR); Verdier, Morgan, 38050 Grenoble Cedex 09 (FR)
(74) Mandataire: Picard, Laurent

(56) Documents cités:
- AU-A- 7 391 581
- FR-A- 2 791 220
- US-A- 2 681 966

## Description

### DOMAINE TECHNIQUE DE L'INVENTION

L'invention est relative à un ensemble de connexion multiple de dispositifs de coupure pour la protection d'une ligne de courant. Ledit ensemble comporte un premier plan de connexion comportant au moins une prise débrochable destinée à recevoir un dispositif de coupure s'embrochant selon une direction d'embrochage. Ledit ensemble comporte un second plan de protection comporte un capot amovible disposant d'au moins une ouverture autorisant le passage des moyens de commande dudit dispositif de coupure. Ledit capot amovible comporte au moins une première zone d'appui destinée à être en appui avec un seconde zone d'appui d'au moins un dispositif de coupure.

L'invention est aussi relative à un dispositif de coupure destiné à être connecté à une prise débrochable d'un ensemble de connexion multiple selon l'invention.

### ETAT DE LA TECHNIQUE ANTERIEURE

L'utilisation d'ensemble de connexion multiple d'appareil électriques, notamment de dispositif de coupure est connue. Les dispositifs de coupure sont destinés à la protection de lignes de courant. Comme illustré dans les brevets US6002580, US 2 681 966 et US6317311, l'ensemble de connexion multiple comporte un plan de connexion comportant une ou plusieurs prises débrochables destinées à recevoir respectivement un dispositif de coupure. Le ou les dispositifs de coupure s'embrochent selon une direction d'embrochage. Les dispositifs de coupure peuvent être reliés à un connecteur via des prises débrochables. Certains ensembles de connexion comporte un couvercle permettant de protéger l'accès aux dispositifs de coupure. Le couvercle comporte de préférence des ouvertures laissant respectivement un libre accès au moyen de commande d'ouverture et de fermeture des dispositifs de coupure.

Lorsque les ensembles de connexion sont utilisés dans des environnements sensibles aux vibrations, les dispositifs de coupure peuvent bouger dans les prises débrochables. Des moyens de maintien spécifiques seraient indispensables pour éviter tout mouvement du dispositif de coupure selon la direction d'embrochage et/ou perpendiculairement à celle ci.

### EXPOSE DE L'INVENTION

L'invention vise donc à remédier aux inconvénients de l'état de la technique, de manière à proposer un ensemble de connexion multiple de dispositifs de coupure débrochables robuste et autorisant son utilisation dans un environnement sensible aux vibrations.

Le capot amovible de l'ensemble de connexion multiple selon l'invention comporte au moins une pièce intermédiaire tampon positionnée entre lesdites au moins première et seconde zones d'appui, la pièce intermédiaire tampon autorisant une répartition uniforme d'une force de maintien sur l'ensemble des dispositifs de coupure au moment du positionnement du capot amovible sur dudit au moins un dispositif de coupure dans la prise débrochable.
au moins une première zone d'appui destinée à être en appui avec un seconde zone d'appui d'au moins un dispositif de coupure, l'appui de la première zone d'appui sur la seconde zone d'appui au moment du positionnement du capot amovible assurant une force de maintien dudit au moins un dispositif de coupure dans la prise débrochable.

De préférence, la pièce intermédiaire tampon est positionnée sur ladite au moins une première zone d'appui ou sur ladite au moins une seconde zone d'appui.

Avantageusement, ladite au moins une pièce intermédiaire tampon est réalisée en matériau déformable.

De préférence, ladite force de maintien comporte une composante principale orientée selon la direction d'embrochage.

Selon un mode préférentiel de développement de l'invention, ladite au moins une première zone d'appui se situe sur la périphérie de chaque ouverture du capot amovible.

Avantageusement, la périphérie de chaque ouverture est de forme cylindrique et est destinée s'emboiter sur une forme tronconique de la seconde zone d'appui d'un dispositif de coupure pour assurer une application progressive de la force de maintien.

De préférence, la pièce intermédiaire tampon comporte un joint torique déformable.

De préférence, ladite au moins une prise débrochable est reliées à un connecteur de puissance via au moins un conducteur comportant des pistes de circuit imprimé reparties sur le premier plan de connexion, ledit connecteur étant relié auxdites pistes de circuit imprimé

Un dispositif de coupure destiné à être connecté à une prise débrochable d'un ensemble de connexion multiple tel que défini ci-dessus, comporte une seconde zone d'appui de forme tronconique, ladite forme tronconique étant destinée à être en appui avec la première zone d'appui cylindrique du capot amovible.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
la figure 1 représente une vue en perspective d'un ensemble de connexion selon un premier mode préférentiel de réalisation de l'invention ;
la figure 2 représente un vue en perspective d'un ensemble de connexion selon un premier mode préférentiel de réalisation de l'invention en cours de montagne ;
la figure 3 représente un vue de coté d'un ensemble de connexion selon la figure 2 ;
la figure 4 représente un dispositif de coupure selon un mode de réalisation de l'invention ;
la figure 5 représente une vue de détail d'un pièce intermédiaire tampon destinée à un dispositif de coupure selon la figure 4 ;
les figures 6 et 7 représentent des vues de dispositifs de coupure selon des modes particuliers de réalisation de l'invention.

### DESCRIPTION DETAILLEE D'UN MODE DE REALISATION

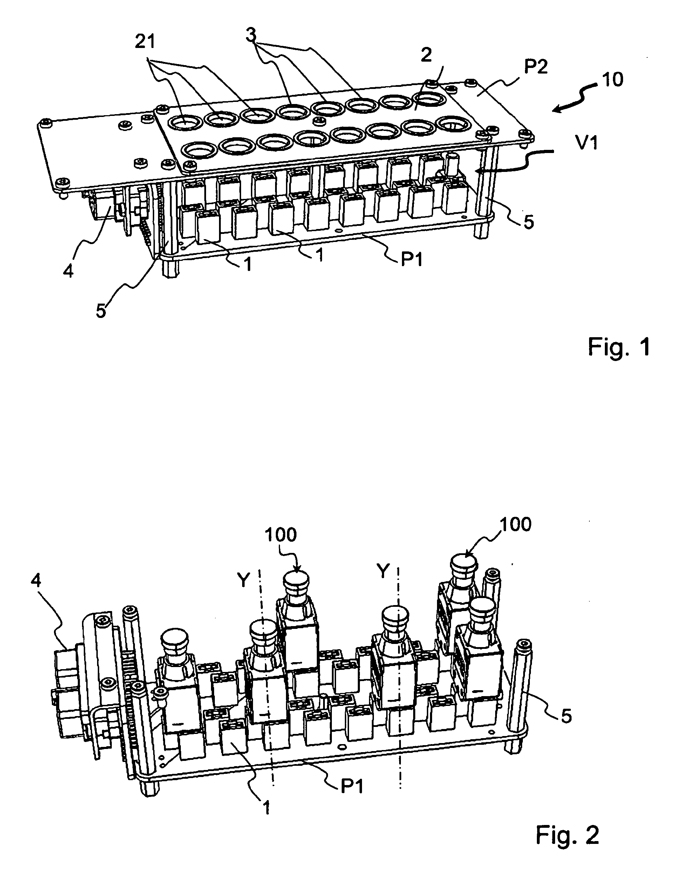

Selon un mode préférentiel de réalisation de l'invention tel que représenté sur la figure 1, l'ensemble de connexion 10 multiple comporte un premier plan de connexion P1. Le premier plan de connexion comporte au moins une prise débrochable 1 destinée à recevoir un dispositif de coupure 100. Ledit dispositif de coupure 100 est destiné à la protection d'une ligne de courant. Ledit dispositif est destiné à s'embrocher dans la prise débrochable 1 selon une direction d'embrochage Y.

Ladite au moins une prise débrochable 1 est reliée à un connecteur de puissance 4 via au moins un conducteur. Le conducteur comporte de préférence des pistes de circuit imprimé reparties sur le premier plan de connexion P1. Le connecteur de puissance 4 est relié auxdites pistes de circuit imprimé.

A titre d'exemple de réalisation tel que représenté sur la figure 2, le premier plan de connexion P1 comporte seize prises débrochables 1.

L'ensemble de connexion 10 multiple comporte un second plan de protection P2. Le premier plan de connexion P1 et le second plan de protection P2 sont séparés l'un de l'autre pour définir un volume interne de connexion V1. Ledit volume interne de connexion V1 est destiné recevoir l'ensemble des dispositifs de coupure connectés aux prises débrochables. L'accès au volume interne de connexion V1 est possible grâce à une zone d'accès réalisée dans le second plan de protection P2.

Le second plan de protection P2 comporte un capot amovible 2 destiné à venir fermer ladite zone d'accès. Le capot amovible 2 dispose d'au moins une ouverture 21 autorisant le passage des moyens de commande 101 d'un dispositif de coupure 100.

Selon le mode de réalisation de l'invention représenté sur les figures 1 à 3, le second plan de protection P2 est solidaire du premier plan de connexion via plusieurs entretoises 5.

A titre d'exemple de réalisation tel que représenté sur la figure 1, le capot amovible 2 comporte seize ouvertures 21.

Le capot amovible 2 comporte au moins une première zone d'appui destinée à être en appui avec un seconde zone d'appui d'au moins un dispositif de coupure 100.

La mise en contact de la première zone d'appui sur la seconde zone d'appui assure une force de maintien Fm dudit au moins un dispositif de coupure 100 dans la prise débrochable 1. La mise en contact de la première zone sur la seconde d'appui est assurée lors du positionnement du capot amovible 2 sur le second plan de protection P2, autrement dit au moment de la fermeture de la zone d'accès.

L'ensemble de connexion 10 comporte au moins une pièce intermédiaire tampon 3 positionnée entre lesdites moins première et seconde zones d'appui. La pièce intermédiaire tampon 3 autorise une répartition uniforme de la force de maintien Fm sur l'ensemble des dispositifs de coupure 100.

La pièce intermédiaire tampon 3 est maintenue sur ladite au moins une première zone d'appui ou sur ladite au moins une seconde zone d'appui.

Ladite au moins une pièce intermédiaire tampon 3 est réalisée de préférence en matériau déformable.

L'application de la force de maintien Fm sur les dispositifs de coupure 100 permet de bloquer respectivement lesdits dispositifs dans les prises débrochables pour empêcher tout mouvement. Lorsqu'un ensemble de connexion selon l'invention est utilisé dans un avion, les vibrations perçues pendant le vol des appareils ne risquent plus de provoquer la déconnexion des dispositifs de coupure 100.

Selon un premier mode préférentiel de réalisation de l'invention représenté sur les figures 1 à 5, ladite au moins une première zone d'appui se situe sur la périphérie de chaque ouverture 21 du capot amovible 2. La périphérie de chaque ouverture 21 est destinée à s'emboiter sur la seconde zone d'appui du dispositif de coupure 100.

La périphérie de chaque ouverture 21 est de préférence de forme cylindrique est destinée s'emboiter sur une forme tronconique de la seconde zone d'appui d'un dispositif de coupure 100. L'utilisation d'une forme tronconique permet d'assurer une application progressive de la force de maintien Fm au moment du positionnement du capot amovible sur le second plan de protection P2.

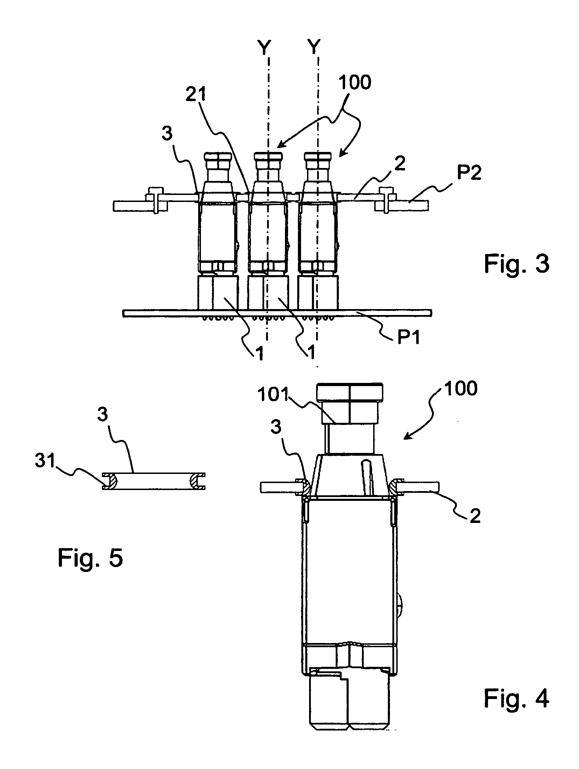

Comme représenté sur la figure 4, la pièce intermédiaire tampon 3 est positionnée sur ladite au moins une première zone d'appui. La pièce intermédiaire tampon comporte de préférence un joint torique déformable. Selon ce mode de développement de l'invention, le joint torique comporte une gorge 31 destinée à venir collaborer avec le bord de l'ouverture 21 du capot amovible 2.

Ladite force de maintien Fm comporte alors une composante principale orientée selon la direction d'embrochage Y.

Selon un second mode préférentiel de réalisation de l'invention, ladite au moins une première zone d'appui se situe sur la périphérie de chaque ouverture 21 du capot amovible 2. La périphérie de chaque ouverture 21 est destinée à s'emboiter sur la seconde zone d'appui du dispositif de coupure 100. La périphérie de chaque ouverture 21 est de préférence de forme cylindrique est destinée s'emboiter sur une forme tronconique de la seconde zone d'appui d'un dispositif de coupure 100. L'utilisation d'une forme tronconique permet d'assurer une application progressive de la force de maintien Fm au moment du positionnement du capot amovible sur le second plan de protection P2.

Comme représenté sur la figure 5, la pièce intermédiaire tampon 3 est positionnée sur ladite au moins une seconde zone d'appui du dispositif de coupure 100. Ladite force de maintien Fm comporte alors une composante principale orientée selon la direction d'embrochage Y.

Selon un troisième mode préférentiel de réalisation de l'invention, ladite au moins une première zone d'appui se situe sur la périphérie de chaque ouverture 21 du capot amovible 2. La périphérie de chaque ouverture 21 est destinée à s'emboiter sur la seconde zone d'appui du dispositif de coupure 100. La périphérie de chaque ouverture 21 est de préférence de forme cylindrique est destinée s'emboiter sur une forme cylindrique de la seconde zone d'appui d'un dispositif de coupure 100.

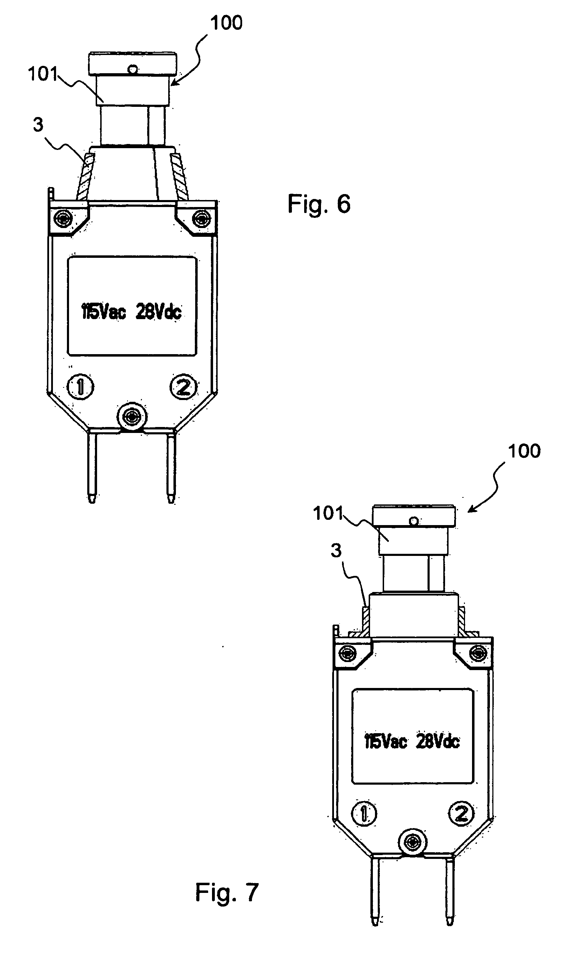

Comme représenté sur la figure 7, la pièce intermédiaire tampon 3 est positionnée sur ladite au moins une première zone d'appui. Ladite force de maintien Fm comporte alors une composante principale orientée selon la direction d'embrochage Y.

L'invention est aussi relative à un dispositif de coupure destiné à être connecté à une prise débrochable d'un ensemble de connexion multiple tel que décrit ci-dessus. Le dispositif de coupure selon l'invention comporte une seconde zone d'appui ayant une forme adaptée pour venir un contact avec une première zone d'appui d'un capot amovible.

Selon un mode particulier de réalisation de l'invention, la seconde zone d'appui du dispositif de coupure 100 comporte une forme tronconique, ladite forme tronconique étant destinée à être en appui avec la première zone d'appui cylindrique du capot amovible 2.

Selon un second mode particulier de réalisation de l'invention tel que représenté sur la figure 6, la seconde zone d'appui du dispositif de coupure 100 comporte une forme tronconique destinée à être en appui avec la première zone d'appui cylindrique du capot amovible. La forme tronconique est recouverte d'une pièce intermédiaire tampon 3.

Selon un autre mode particulier de réalisation de l'invention tel que représenté sur la figure 7, la seconde zone d'appui du dispositif de coupure comporte une forme cylindrique destinée à être en appui avec la première zone d'appui cylindrique du capot amovible. La forme cylindrique est recouverte d'une pièce intermédiaire tampon 3. Selon ce mode particulier de réalisation, la pièce intermédiaire tampon 3 s'étend de préférence sur le dispositif de coupure au delà de la zone cylindrique.

## Revendications

1. Ensemble de connexion (10) multiple de dispositifs de coupure (100) pour la protection d'une ligne de courant, ensemble comportant :
- un premier plan de connexion (P1) comportant au moins une prise débrochable (1) destinée à recevoir un dispositif de coupure (100) s'embrochant selon une direction d'embrochage (Y) ;
- un second plan de protection (P2) comportant un capot amovible (2) disposant d'au moins une ouverture (21) autorisant le passage des moyens de commande (101) dudit dispositif de coupure (100);
ledit capot amovible (2) comportant au moins une première zone d'appui destinée à être en appui avec un seconde zone d'appui d'au moins un dispositif de coupure (100),
ensemble de connexion, **caractérisé en ce qu'**il comporte au moins une pièce intermédiaire tampon (3) positionnée entre lesdites au moins première et seconde zones d'appui, la pièce intermédiaire tampon (3) autorisant une répartition uniforme d'une force de maintien (Fm) sur l'ensemble des dispositifs de coupure (100) au moment du positionnement du capot amovible (2) sur dudit au moins un dispositif de coupure (100) dans la prise débrochable (1).

2. Ensemble de connexion multiple selon la revendication 1, **caractérisé en ce que** la pièce intermédiaire tampon (3) est positionnée sur ladite au moins une première zone d'appui ou sur ladite au moins une seconde zone d'appui.

3. Ensemble de connexion multiple selon la revendication 1 ou 2, **caractérisé en ce que** ladite au moins une pièce intermédiaire tampon (3) est réalisée en matériau déformable.

4. Ensemble de connexion multiple selon l'une des revendications 1 à 3, **caractérisé en ce que** ladite force de maintien (Fm) comporte une composante principale orientée selon la direction d'embrochage (Y).

5. Ensemble de connexion multiple selon l'une quelconque des revendications précédentes, **caractérisé en ce que** ladite au moins une première zone d'appui se situe sur la périphérie de chaque ouverture (21) du capot amovible (2).

6. Ensemble de connexion multiple selon la revendication 5, **caractérisé en ce que** la périphérie de chaque ouverture (21) est de forme cylindrique et est destinée s'emboiter sur une forme tronconique de la seconde zone d'appui d'un dispositif de coupure (100) pour assurer une application progressive de la force de maintien (Fm).

7. Ensemble de connexion multiple selon la revendication 6, **caractérisé en ce que** la pièce intermédiaire tampon (3) comporte un joint torique déformable.

8. Ensemble de connexion multiple selon l'une quelconque des revendications précédentes, **caractérisé en ce que** ladite au moins une prise débrochable (1) est reliées à un connecteur de puissance (4) via au moins un conducteur comportant des pistes de circuit imprimé reparties sur le premier plan de connexion (P1), ledit connecteur étant relié auxdites pistes de circuit imprimé

9. Dispositif de coupure destiné à être connecté à une prise débrochable d'un ensemble de connexion multiple selon les revendications précédentes 6 à 8, **caractérisé en ce qu'**il comporte une seconde zone d'appui de forme tronconique, ladite forme tronconique étant destinée à être en appui avec la première zone d'appui cylindrique du capot amovible.

## Patentansprüche

1. Mehrfach-Anschlusssystem (10) für Schalteinrichtungen (100) zum Schutz einer elektrischen Leitung, welches System
- eine erste Anschlussebene (P1) mit mindestens einer Steckbuchse (1) zur Aufnahme einer, längs einer Steckrichtung (Y) eingesteckten Schalteinrichtung (100) sowie
- eine zweite Anschlussebene (P2) mit einer abnehmbaren Abdeckung (2) umfasst, in der mindestens eine Öffnung (21) zur Durchführung der Betätigungsorgane (101) der genannten Schalteinrichtung (100) ausgebildet ist,
wobei die genannte abnehmbare Abdeckung (2) mindestens einen ersten Abstützbereich umfasst, der dazu dient, auf einem zweiten Abstützbereich mindestens einer Schalteinrichtung (100) aufzuliegen,
welches Anschlusssystem **dadurch gekennzeichnet ist, dass** es mindestens ein zwischen dem genannten ersten und dem genannten zweiten Abstützbereich angeordnetes Dämpfungs-Zwischenstück (3) umfasst, welches Dämpfungs-Zwischenstück (3) eine gleichmäßige Verteilung einer Haltekraft (Fm) auf sämtlichen Schalteinrichtungen (100) erlaubt, wenn die abnehmbare Abdeckung (2) auf der mindestens einfach vorhandenen, in die Steckbuchse (1) eingesteckten Schalteinrichtung (100) positioniert wird.

2. Mehrfach-Anschlusssystem nach Anspruch 1, **dadurch gekennzeichnet, dass** das Dämpfungs-Zwischenstück (3) am mindestens einfach vorhandenen ersten Abstützbereich oder am mindestens einfach vorhandenen zweiten Abstützbereich angeordnet ist.

3. Mehrfach-Anschlusssystem nach Anspruch 1 oder 2, **dadurch gekennzeichnet, dass** das mindestens einfach vorhandene Dämpfungs-Zwischenstück (3) aus einem verformbaren Material besteht.

4. Mehrfach-Anschlusssystem nach einem der Ansprüche 1 bis 3, **dadurch gekennzeichnet, dass** die genannte Haltekraft (Fm) eine Hauptkomponente umfasst, die in Steckrichtung (Y) wirkt.

5. Mehrfach-Anschlusssystem nach irgendeinem der vorhergehenden Ansprüche, **dadurch gekennzeichnet, dass** der genannte, mindestens einfach vorhandene Abstützbereich am Umfang jeder Öffnung (21) der abnehmbaren Abdeckung (2) angeordnet ist.

6. Mehrfach-Anschlusssystem nach Anspruch 5, **dadurch gekennzeichnet, dass** die Umfangskontur jeder Öffnung (21) eine zylindrische Form aufweist, die dazu dient, mit einer konischen Form des zweiten Abstützbereichs einer Schalteinrichtung (100) zusammenzuwirken, um eine fortschreitende Zunahme der Haltekraft (Fm) zu gewährleisten.

7. Mehrfach-Anschlusssystem nach Anspruch 6, **dadurch gekennzeichnet, dass** das Dämpfungs-Zwischenstück (3) einen verformbaren Dichtungsring umfasst.

8. Mehrfach-Anschlusssystem nach irgendeinem der vorhergehenden Ansprüche, **dadurch gekennzeichnet, dass** die genannte, mindestens einfach vorhandene Steckbuchse (1) über mindestens einen Leiter, der in der ersten Anschlussebene (P1) angeordnete Leiterbahnen einer gedruckten Schaltung umfasst, mit einem Leistungs-Steckverbinder (4) verbunden ist, welcher Steckverbinder mit den genannten Leiterbahnen der gedruckten Schaltung verbunden ist.

9. Schalteinrichtung zum Anschluss an eine Steckbuchse eines Mehrfach-Anschlusssystems nach einem der Ansprüche 6 bis 8, **dadurch gekennzeichnet, dass** sie einen zweiten Abstützbereich mit konischer Form umfasst, welche konische Form dazu dient, auf dem ersten, zylindrisch geformten Abstützbereich der abnehmbaren Abdeckung aufzuliegen.

## Claims

1. A system (10) for multiple connection of switchgear devices (100) for protection of a current line, a system comprising:
- a first connection plane (P1) comprising at least one plug-in connector (1) designed to receive a switchgear device (100) engaging in a plug-in direction (Y);
- a second protection plane (P2) comprising a removable cover (2) provided with at least one opening (21) enabling the control means (101) of said switchgear device (100) to pass through;
said removable cover (2) comprising at least a first pressing area designed to press against a second pressing area of at least one switchgear device (100),
a connection system **characterized in that** it comprises at least one intermediate buffer part (3) positioned between said at least first and second pressing areas, the intermediate buffer part (3) enabling a uniform distribution of a holding force (Fm) over the whole set of switchgear devices (100) at the time the removable cover (2) is positioned on said at least one switchgear device (100) in the plug-in connector.

2. The multiple connection system according to claim 1, **characterized in that** the intermediate buffer part (3) is positioned on said at least first pressing area or on said at least second pressing area.

3. The multiple connection system according to claim 1 or 2, **characterized in that** said at least one intermediate buffer part (3) is made from deformable material.

4. The multiple connection system according to one of claims 1 to 3, **characterized in that** said holding force (Fm) comprises a main component directed in the plug-in direction (Y).

5. The multiple connection system according to any one of the foregoing claims, **characterized in that** said at least first pressing area is located on the periphery of each opening (21) of the removable cover (2).

6. The multiple connection system according to claim 5, **characterized in that** the periphery of each opening (21) is of cylindrical shape and is designed to engage on a tapered shape of the second pressing area of a switchgear device (100) to achieve progressive application of the holding force (Fm).

7. The multiple connection system according to claim 6, **characterized in that** the intermediate buffer part (3) comprises a deformable O-ring.

8. The multiple connection system according to any one of the foregoing claims, **characterized in that** said at least one plug-in connector (1) is connected to a power connector (4) via at least one conductor comprising printed circuit tracks arranged on the first connection plane (P1), said connector being connected to said printed circuit tracks.

9. A switchgear device designed to be connected to a plug-in connector of a multiple connection system according to the foregoing claims 6 to 8, **characterized in that** it comprises a second pressing area of tapered shape, said tapered shape being designed to press against the cylindrical first pressing area of the removable cover.
